# FASCICULE DE BREVET EUROPEEN

(11) **EP 4 347 320 B1**
(45) Date de publication et mention de la délivrance du brevet: **29.01.2025**
(21) Numéro de dépôt: 22721415.2
(22) Date de dépôt: 07.04.2022
(51) Int. Cl.: B60R 19/18, B60R 19/04

(54) **DISPOSITIF DE RENFORT DE POUTRE DE PARE-CHOCS AVEC UNE LUMIÈRE POUR LE PASSAGE D'UNE DOUILLE DE REMORQUAGE**
VORRICHTUNG ZUR VERSTÄRKUNG EINES STOSSFÄNGERTRÄGERS MIT EINER ÖFFNUNG FÜR DEN DURCHGANG EINER ANHÄNGERKUPPLUNG
DEVICE FOR REINFORCING A BUMPER BEAM HAVING A HOLE FOR THE PASSAGE OF A TOWING SOCKET

(30) Priorité: 28.05.2021 FR 2105601
(43) Date de publication de la demande: 10.04.2024
(73) Titulaire: Stellantis Auto SAS, 78300 Poissy (FR)
(72) Inventeur: ROYER, Guillaume, 91680 BRUYERES LE CHATEL (FR)
(74) Mandataire: BCIP
(86) Numéro de dépôt international: PCT/FR2022/050655
(87) Numéro de publication internationale: WO 2022/248786

(56) Documents cités:
- US-A1- 2007 029 824
- US-A1- 2016 096 496
- US-A1- 2017 274 849

## Description

Le domaine technique concerne les dispositifs de renfort de poutre de pare-chocs et les véhicules équipés de tels dispositifs.

En matière de sécurité routière, les constructeurs d'automobiles doivent prendre en compte de multiples préoccupations et réglementations lors du développement de nouveaux véhicules. En particulier, les constructeurs d'automobiles doivent assurer la sécurité des passagers du véhicule en cas de collision mais également protéger les autres usagers de la route les plus vulnérables tels que les piétons. Enfin il convient de chercher à maitriser les coûts de réparations des véhicules lorsqu'ils subissent des chocs urbains, dénommés chocs réparabilité, c'est-à-dire des chocs subis à de faibles vitesses de l'ordre de 15 à 20 kilomètres par heure. Les comportements des véhicules automobiles dans ces trois situations sont réglementés et testés en mettant en œuvre des procédures de tests normalisées. Les exigences en termes de résultats à ces tests sont toujours plus nombreuses et plus difficiles à satisfaire et obligent les constructeurs d'automobiles à innover constamment. Pour répondre aux exigences mentionnées précédemment, les constructeurs de véhicules automobiles ont ainsi développé des systèmes d'absorption de chocs, encore dénommés SAC, qui en règle générale comportent une poutre de pare-chocs reliée au châssis du véhicule, au moyens de caissons d'absorption disposés entre la poutre de pare-chocs et un longeron et conçus pour se déformer lors d'un choc, typiquement en subissant une compression de sorte à permettre le rapprochement relatif de la poutre de pare-chocs vers les longerons.

Afin d'optimiser le comportement d'un SAC, les constructeurs ont recours à des renforts modulaires, fixés sur la poutre, qui permettent de faciliter la réparation du véhicule après un choc réparabilité.

Il existe plusieurs types de SAC, distingués, en particulier, par la hauteur relative de la poutre de pare-chocs selon un axe vertical du véhicule. La poutre de pare-chocs pouvant en effet être positionnée plus ou moins haute par rapport à une référence donnée, par exemple le sol sur lequel est le véhicule.

Parmi les renforts modulaires possibles, certains véhicules présentent un renfort modulaire particulier munit d'un orifice circulaire qui permet d'assurer le passage d'une douille de remorquage. Ainsi, suivant le type de SAC, il convient d'utiliser un renfort modulaire présentant l'orifice circulaire ménagé à l'endroit correct pour permettre l'introduction de la douille de remorquage. De ce fait, plusieurs renforts modulaires différents doivent être produits pour s'adapter à chaque type de SAC, c'est-à-dire à chaque hauteur de poutre.

Une telle diversité de renforts modulaires représente donc un coût et une complexité qui va à l'encontre des efforts des constructeurs d'automobiles pour harmoniser et simplifier les systèmes de production. Le document US 2017/274849 A1 divulgue un ensemble présentant une poutre de pare-chocs d'un véhicule conforme au préambule de la revendication 1.

Ainsi, il existe un besoin d'une solution permettant de réduire la diversité des renforts modulaires à produire.

La présente invention a pour objet de pallier les problèmes exposés précédemment. Dans ce contexte technique, un but de la présente invention est de fournir un dispositif modulaire de renfort capable de s'adapter sur les différents types de SAC.

A cet effet, la présente invention se rapporte à un ensemble présentant une poutre de pare-chocs d'un véhicule, avec les caractéristiques de la revendication 1.

Ainsi, le dispositif modulaire de renfort peut être fixé sur une poutre de pare-chocs afin d'assurer une fonction similaire à un renfort modulaire. Grâce à la lumière ménagée dans la platine et présentant une extension curviligne supérieure à sa largeur, il est possible de fixer à travers la platine une douille de remorquage. La position de l'orifice de fixation de la douille de remorquage importe peu puisque la forme de la lumière permet de s'assurer qu'elle s'étend au droit de l'orifice de fixation, quelle que soit sa hauteur par rapport à un rebord de fixation.

Selon un mode de réalisation de l'invention, la lumière présente une forme oblongue et rectiligne.

Selon une possibilité la lumière est conçue pour s'étendre suivant un axe transversal de la poutre de pare-chocs, lorsque le dispositif est fixé sur la poutre de pare-chocs.

Selon une possibilité l'ensemble comporte en outre une douille de remorquage fixée dans l'orifice de fixation, à travers la lumière du dispositif.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective et de face d'un dispositif selon l'invention ;
[Fig. 2] la figure 2, représente une vue de détails d'un ensemble selon l'invention montrant le dispositif fixé sur la poutre.

Dans ces figures, les mêmes références sont utilisées pour désigner les mêmes éléments.

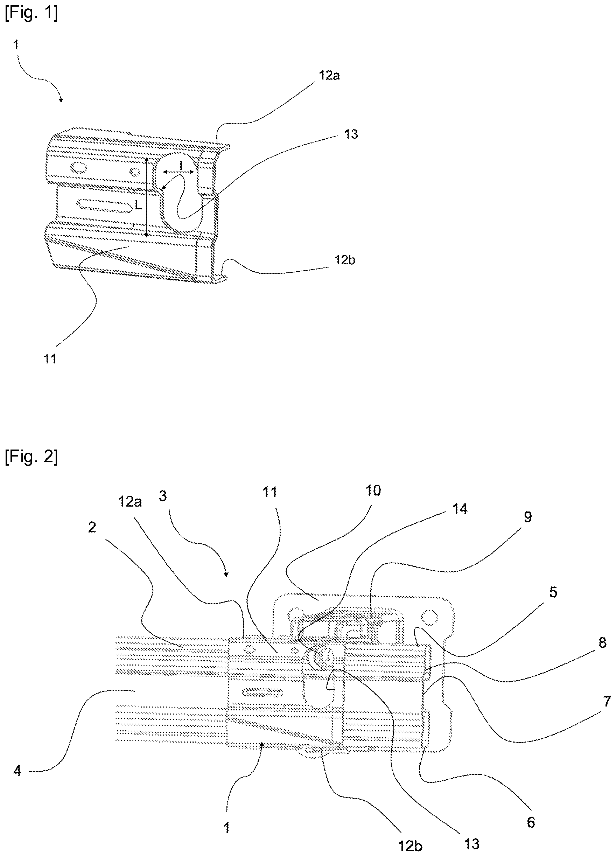

Un dispositif 1 modulaire de renfort, illustré sur les figures 1 et 2, est conçu pour renforcer une portion d'une poutre de pare-chocs 2 d'un véhicule, illustrée partiellement sur la figure 2. La Figure 2 représente le dispositif 1 fixé sur la poutre de pare-chocs 2 pour former un ensemble 3 selon l'invention.

Une telle poutre de pare-chocs 2 présente une face avant 4 prolongée par une face supérieure 5 et une face inférieure 6 qui forment diverses faces d'un profilé 7. La poutre de pare-chocs 2 est fixée à chacune de ses extrémités 8, dont une est représentée sur la figure 2, sur un absorbeur 9 lui-même fixé à une interface 10, illustrée sur la figure 2, conçue pour fixer l'ensemble 3 à un châssis d'un véhicule, par exemple à un longeron, non illustré sur les figures.

Le dispositif 1 comporte une platine 11, destinée à être disposée en appui de la face avant 4 de la poutre de pare-chocs 2. Avantageusement la platine 11 présente une forme complémentaire à la forme du profilé 7 correspondant à la face avant 4. La platine 11 présente une forme sensiblement rectangulaire vue suivant une direction perpendiculaire à la face avant 4, la largeur étant sensiblement égale ou légèrement supérieure à la largeur de la face avant 4. Selon une coupe transversale, la platine 11 présente une forme d'un W dont les sommets sont arrondis. Le dispositif 1 comporte au moins deux rebords de fixation 12a, 12b opposés, prolongeant la platine 11 et inclinés par rapport à la platine 11. Les rebords de fixation 12a, 12b sont conçus pour permettre la fixation du dispositif 1 respectivement sur les faces supérieure 5 et inférieure 6 de la poutre de pare-chocs 2. Ainsi, les rebords de fixation 12a, 12b sont conformés pour venir en appui des faces inférieure 5 et supérieure 6 tandis que la platine 11 s'étend en regard de la face avant 4. Afin d'assurer la fixation du dispositif 1, les rebords de fixation 12a, 12b sont par exemple soudés respectivement sur les faces supérieure 5 et inférieure 6.

La platine 11 comporte au moins une lumière 13, ménagée dans la platine 11 et présentant une extension curviligne L supérieure à sa largeur I, illustrée sur la figure 1. La lumière 13 présente, par exemple, une forme oblongue et rectiligne suivant un axe transversal de la poutre de pare-chocs 2 lorsque le dispositif 1 est fixé sur la poutre de pare-chocs 2. La lumière 13 est dimensionnée pour permettre la fixation d'une douille de remorquage, non représentée, à travers la lumière 13, dans un orifice de fixation 14 ménagé dans la poutre de pare-chocs 2. A cet effet, la largeur de la lumière 13 est supérieure à la largeur de la douille de remorquage. Dans l'ensemble 3 selon l'invention, illustrés sur la figure 2, le dispositif 1 est positionné sur la face avant 4 de sorte à ce que l'orifice de fixation 14 de la douille de remorquage soit accessible à la douille de remorquage à travers la lumière 13.

Ainsi, le dispositif 1 de renfort est conçu pour être fixé sur une poutre de pare-chocs 2 afin de la renforcer. L'extension curviligne L de la lumière 13 permet de garantir que l'orifice de fixation 14 soit toujours accessible à travers la lumière 13 quelle que soit sa position par rapport à l'un des rebords de fixation 12a, 12b. De ce fait, un unique dispositif 1 permet de s'affranchir du besoin de disposer de plusieurs renforts classiques.

L'invention ne se limite pas au mode de réalisation du dispositif décrit ci-avant, seulement à titre d'exemple, mais d'autres modes de réalisation peuvent être conçus par l'homme de métier sans sortir du cadre et de la portée de la présente invention déterminés par les revendications.

## Revendications

1. Ensemble (3) présentant une poutre de pare-chocs (2) d'un véhicule, la poutre de pare-chocs (2) présentant une face avant (4) prolongée par une face supérieure (5) et une face inférieure (6), la poutre de pare-chocs (2) présentant un orifice de fixation (14), ménagé dans la face avant (4) et conçu pour permettre la fixation d'une douille de remorquage, l'ensemble (3) comprenant en outre au moins un dispositif (1) modulaire de renfort pour renforcer une poutre de pare-chocs (2) d'un véhicule, le dispositif (1) comportant une platine (11), disposée en appui de la face avant (4) de la poutre de pare-chocs (2), le dispositif (1) comportant au moins deux rebords de fixation (12a, 12b) opposés, prolongeant la platine (11) et inclinés par rapport à la platine (11), fixés respectivement sur les faces supérieure (5) et inférieure (6) de la poutre de pare-chocs (2), la platine (11) comportant au moins une lumière (13), ménagée dans la platine (11) et présentant une extension curviligne (L) supérieure à sa largeur (I), **caractérisé en ce que** l'ensemble permet la fixation d'une douille de remorquage dans la poutre de pare-chocs (2) à travers la lumière (13).

2. Ensemble (3) selon la revendication 1, **caractérisé en ce que** la lumière (13) présente une forme oblongue et rectiligne.

3. Ensemble (3) selon la revendication 1 ou 2, **caractérisé en ce que** la lumière (13) s'étend suivant un axe transversal de la poutre de pare-chocs (2).

4. Ensemble (3) selon l'une quelconque des revendications précédentes, **caractérisé en ce qu'**il comporte en outre une douille de remorquage fixée dans l'orifice de fixation (14), à travers la lumière (13) du dispositif (1).

5. Véhicule comportant au moins un ensemble selon l'une quelconque des revendications précédentes.

## Patentansprüche

1. Anordnung (3) mit einem Stoßfängerträger (2) eines Fahrzeugs, wobei der Stoßfängerträger (2) eine von einer Oberseite (5) und einer Unterseite (6) verlängerte Vorderseite (4) aufweist, wobei der Stoßfängerträger (2) eine in der Vorderseite (4) ausgebildete Befestigungsöffnung (14) zur Befestigung einer Schlepphülse aufweist (1) ferner mit mindestens einer modularen Verstärkungseinrichtung (1) zur Verstärkung eines Stoßfängerbalkens (2) eines Fahrzeugs, wobei die Einrichtung (1) eine Platine (11) aufweist, die an der Vorderseite (4) des Stoßfängerbalkens (2) anliegt, wobei die Einrichtung (1) mindestens zwei gegenüberliegende Befestigungsflansche (12a, 12b) aufweist, die die die Platine (1) verlängern und gegenüber der Platine (11) geneigt, jeweils an der Oberseite (5) und der Unterseite (6) des Stoßfängerbalkens (2) befestigt, wobei die Platine (11) mindestens eine in der Platine (11) ausgebildete Öffnung (13) mit einer über ihrer Breite (I) liegenden gekrümmten Erstreckung (L) aufweist, **dadurch gekennzeichnet, dass** die Baugruppe die Befestigung einer Buchse ermöglicht Abschleppeinrichtung im Stoßfängerträger (2) durch die Öffnung (13).

2. Anordnung (3) nach Anspruch 1, **dadurch gekennzeichnet, dass** das Lumen (13) eine längliche, gerade Form aufweist.

3. Anordnung (3) nach Anspruch 1 oder 2, **dadurch gekennzeichnet, dass** sich die Öffnung (13) entlang einer Querachse des Stoßfängerbalkens (2) erstreckt.

4. Anordnung (3) nach einem der vorhergehenden Ansprüche, **dadurch gekennzeichnet, dass** sie ferner eine Schlepphülse umfasst, die in der Befestigungsöffnung (14) durch die Öffnung (13) der Vorrichtung (1) befestigt ist.

5. Fahrzeug mit mindestens einer Anordnung nach einem der vorhergehenden Ansprüche.

## Claims

1. Set (3) having a bumper beam (2) of a vehicle, the bumper beam (2) having a front face (4) extended by a top face (5) and a lower face (6), the bumper beam (2) having a fixing hole (14), housed in the front face (4) and designed to allow the attachment of a towing socket, (3) in addition to a system (1) of a modular reinforcement device to strengthen a bumper beam (2) of a vehicle, a device (1) of a plate (11), fitted in support of the front face (4) of the bumper beam (2), a device (1) of at least two attachment edges (12a, 12b) opposite, the plate (11) and inclined to the plate (11), fixed respectively on the upper (5) and lower (6) faces of the bumper beam (2), the plate (11) having at least one light (13), housed in the plate (11) and having a curviline extension (L) greater than its width (I), **characterized in** This is what the assembly allows the attachment of a towing socket in the bumper beam (2) through the light (13).

2. Together (3) according to Claim 1, **characterized in that** light (13) has an oblong and straight shape.

3. Set (3) according to claim 1 or 2, characterized as light (13) extends along a transverse axis of the bumper beam (2).

4. Set (3) in accordance with any of the preceding claims, **characterized by** the addition of a towing socket fixed in the attachment hole (14) through the light (13) of the device (1).

5. A vehicle with at least one set in accordance with any of the preceding claims.
